# EUROPEAN PATENT APPLICATION

(11) **EP 4 789 735 A1**
(43) Date of publication of application: **12.08.2026**
(21) Application number: 26153247.7
(22) Date of filing: 21.01.2026
(51) Int. Cl.: A63C 19/12, B60J 7/06

(54) **SLIDING SKID MOUNTED AT THE END OF A SUPPORT RIB OF A COVERING TARPAULIN, IN PARTICULAR FOR COVERING A CONTAINER.**

(30) Priority: 21.01.2025 IT 202500000957
(71) Applicant: Marcolin Covering S.r.l., 33170 Pordenone (PN) (IT)
(72) Inventor: MARCOLIN, Luca, 33170 Pordenone (PN) (IT); COLUSSI MAS, Massimiliano, 33070 Maron di Brugnera (PN) (IT)
(74) Representative: Gallo, Luca

(57) **Abstract**

Is described a sliding skid which can be coupled to a foot of a rib supporting a covering tarpaulin, the rib being movable by a traction rope to slide on a side of the body, the skid comprising in use:
- a block defining a lateral cavity shaped to accommodate the foot of the rib; and
- a guiding member connected to the block and comprising a tunnel between whose walls the rope can be inserted without coming out of the tunnel.

To facilitate maintenance, the tunnel has walls that can be spaced apart to free one side of the tunnel and allow the rope to be inserted into or removed from the tunnel.

## Description

The present invention relates to a sliding skid mounted at the end of a support rib of a covering tarpaulin, in particular for covering a container; a support rib equipped with the sliding skid; and a covering system comprising a plurality of such ribs.

Covering systems are known for covering/uncovering a body, which use a set of ribs to support and spread a tarpaulin over the container. The ribs slide on opposite edges of the container, pulled by rope loops, as for example in EP 2321133.

Covering systems for covering/uncovering a body are also known which provide for the foot of the rib to be secured to the sliding skid by means of a fastening element (e.g. a screw). Examples of such covering systems are shown, for example, in US 2024042839A1, EP 2193040A1 and US 2023392429A1.

One problem with known cover systems is the speed of repair when a component of the skid is damaged or wears out. In particular, the rope is able to pull the skid thanks to a guiding member mounted on the skid. The guiding member is provided with one or more tunnels through which the rope is threaded to slide.

When the guiding member wears out, breaks or is damaged (e.g. by a bucket during loading manoeuvres), the entire rope drive system or at least the guiding member must be dismantled. Replacement is very complicated and laborious in any case.

The main purpose of the invention is to eliminate or mitigate the problem by creating a different type of skid of the above-mentioned type.

Another purpose is to create a skid of the above type with which it is easy and quick to replace the guiding member for the rope.

A sliding skid is therefore proposed that can be coupled to a foot of a rib supporting a covering tarpaulin, the rib being movable by a traction rope to slide, for example, on opposite sides of an open-top container, the skid comprising in use:
- a block delimiting a lateral cavity shaped to house the foot of the rib;
- a guiding member connected to the block and comprising a tunnel between whose walls the rope can be inserted without coming out of the tunnel;
where the tunnel has walls that can be spaced apart to free one side of the tunnel and allow the rope to be inserted into or removed from the tunnel.

In other words, the walls can be spaced apart at least enough to create a longitudinal slot in the tunnel for the rope to pass through.

Thanks to the movable tunnel walls for opening or closing one side of the tunnel, the rope can be easily detached from the skid and replaced if damaged.

In one embodiment, the guiding member comprises a first and second tunnel portion, which are preferably juxtaposed to form the tunnel walls, and at least the first tunnel portion is movable relative to the second to disconnect the tunnel walls and thus free the rope.

Thanks to the reconfigurable tunnel portions for opening or closing the tunnel walls, the rope can be easily released from the skid and replaced if damaged.

In one embodiment, in the guiding member, the first tunnel portion is permanently connected in a movable manner to the second. For example, one tunnel portion is hinged to the other.

Then, a relative movement between the two tunnel sections is sufficient to release the rope, but without the two tunnel sections detaching from each other.

In one embodiment, in the guiding member, one tunnel portion is separable and/or detachable from the other. In this variant, to release the rope, the contact between the two tunnel portions is permanently cancelled.

In one embodiment
the first tunnel portion comprises a concave portion and
the first tunnel portion and the second tunnel portion are placed side by side, preferably attached to each other, so that the concave portion faces its concavity towards the second tunnel portion to be closed by an opposite surface of the latter, thus forming a rope tunnel between the concave portion and said opposite surface.

In one embodiment, said opposite surface corresponds to a concave portion of the second tunnel portion having its concavity facing the first tunnel portion, and

the tunnel portions are placed side by side, preferably attached to each other, so that their respective concave portions fit together to thus form a rope tunnel between the concave portions.

In one embodiment, one or each of the concave portions has a substantially semicircular, polygonal or elliptical cross-section.

To solve the problem of quick replacement of the guiding member, it is attached to the block by non-permanent fastening means. If it is necessary to replace or modify the guiding member of a skid, it is then sufficient to operate on the fastening means to disconnect the guiding member from the respective block. It is therefore not necessary to remove the entire skid from the respective rib. The problem is solved regardless of the structure of the guiding member.

In one embodiment, the guiding member comprises an end that is fixed to one side of the block. The guiding member is preferably mounted on that side to extend downwardly in a cantilevered manner.

In one embodiment, at least one of the first tunnel portion and the second tunnel portion, preferably both, is a shaped plate, for example, made of metal or plastic.

In one embodiment, said end of the guiding member fixed to the side of the block is the flat end of two plates that constitute the guiding member and/or its tunnel portions, and

the skid comprises a fastening element mounted to clamp the flat ends of the plates in a mutually overlapping position.

In one embodiment, the fastening element
is removable, such as a screw; and/or
it comprises a thread for fastening.

In one embodiment, the fastening element has an anchor point on the second side.

In one embodiment, the fastening element has an anchor point on the foot end of the rib, and preferably the anchor point comprises a thread.

In one embodiment, the fastening element is mounted on the skid to fasten the flat ends to the side of the block. In particular, each flat end is provided with a hole and the fastening element is threaded into each hole.

In one embodiment, the guiding member and/or each tunnel portion comprises two rope tunnels formed as defined above, the rope tunnels having parallel and spaced longitudinal axes; preferably, the axes are contained in a plane, in use, substantially vertical.

In one embodiment, the guiding member is mounted on the second side to project cantilevered from the block so that the axes of the tunnels are arranged in a substantially vertical plane.

In one embodiment, the skid includes a sliding member mounted under and as a base for the block to slide on the side of the container with low friction.

In one embodiment, the cover tarpaulin is installed to cover an open-top container, for example of a truck.

Another aspect of the invention relates to a support rib equipped with a skid according to the invention.

Another aspect of the invention relates to a covering system comprising a plurality of ribs equipped with a skid according to the invention.

Another aspect of the invention relates to an open-top container, for example of a vehicle, comprising:
- opposite sides of the container,
- a plurality of ribs that are
   equipped with two end feet, each foot having a sliding skid attached to it according to the invention, and
   mounted so as to slide on the container with the respective feet on each side,
- a rope loop for pulling the ribs over the body in order to distribute them over the container to cover it or pack them on one side of the container to uncover it.

The advantages of the invention will be further clarified by preferred embodiments described below with reference to the accompanying drawings, in which:
- Figure 1 shows a side view of a covering system;

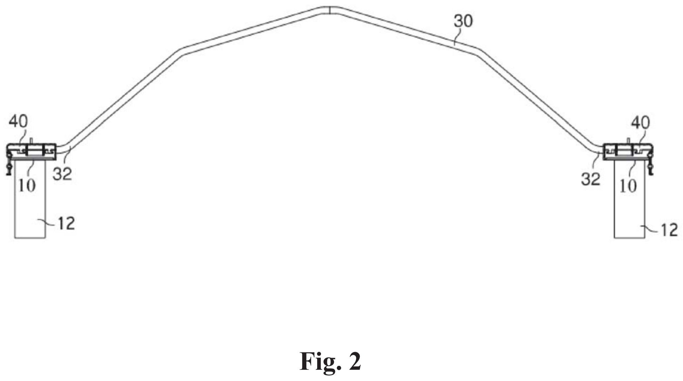

- Figure 2 shows a front view of the system of Figure 1;
- Figure 3 shows a three-dimensional view of a skid for a rib;
- Figure 4 shows the skid in a three-dimensional exploded view;
- Figure 5 shows a three-dimensional view of an enlargement of components of the skid;
- Figure 6 shows a front view of a variant of a component of the skid.

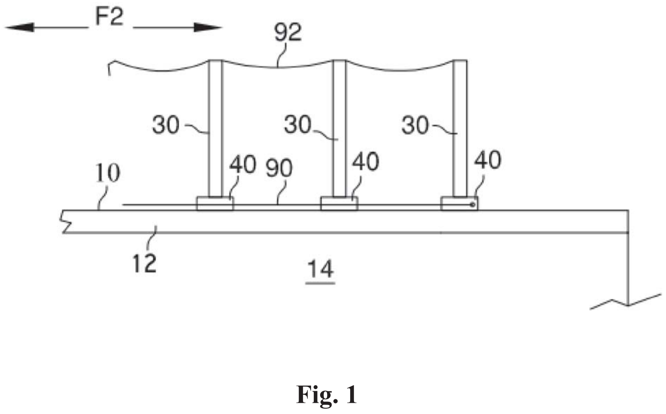

In the figures, identical numbers indicate identical or conceptually similar parts, and the system is described as in use and preferably mounted on an open-top container, e.g. of a truck. Fig. 1 shows schematically in general a preferred sliding system to which a skid according to the invention is applicable.

Above opposite edges 10 of sides 12 of a container 14, ribs 30 can slide horizontally (direction F2 parallel to edges 10) in a known manner by means of a rope loop 90. The ribs 30 support a tarpaulin cover 92 for the container 14. By moving the rope loop 90, the container 14 can be covered or uncovered in a known manner by distributing the ribs 30 over the container 14 or by packing them all on one side of the container 14. Advantageously, the cover tarpaulin 92 is attached directly to the foot of the ribs 32.

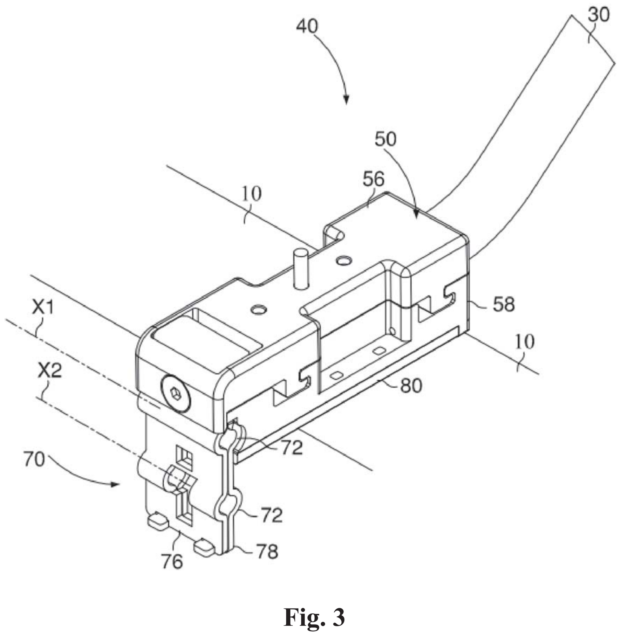

A skid 40 is mounted at each end or foot 32 of each rib 30, as shown in detail in Figs. 3-4. The foot of the rib 32 has a threaded engagement hole at its end, the purpose of which is explained below. The skid 40 comprises
- a block 50, which delimits a lateral cavity 52 shaped to accommodate the foot of the rib 32 in a complementary manner;
- a guiding member 70, which is connected to the block 50 and is equipped with at least one tunnel 72 into which the rope loop 90 can be inserted; and preferably
- a sliding member 80, which is mounted under - and as a base for - block 50 to slide on the edge 12 of the container 14 with low friction.

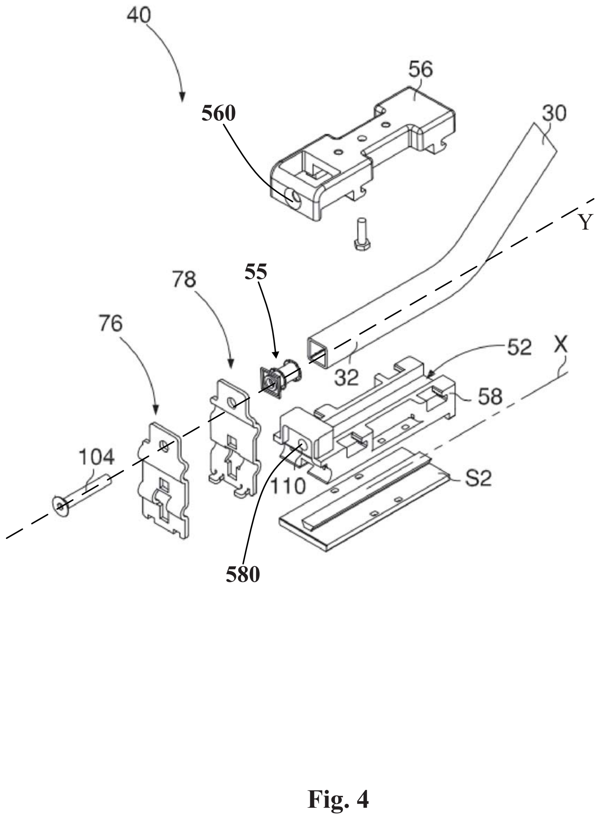

In particular, as shown in Figure 4, block 50 comprises a second side, which defines the side cavity 52 designed to house the foot of rib 32. Advantageously, as illustrated in Figure 4, when the foot of the rib 32 is inserted into the lateral cavity 52, the block 50 at least partially envelops the foot of the rib 32.

Advantageously, the block 50, and in particular the second side thereof, comprises a stop wall, which is designed to receive the end of the foot of the rib 32 when the latter is inserted into the aforementioned side cavity 52, so as to determine a correct and stable positioning of the foot of the rib 32 in the block 50.

As shown in Figure 4, the block 50 also comprises a first side, opposite the aforementioned second side, to which the guiding member 70 is connected, as explained in more detail below.

In the example, the guiding member 70 advantageously comprises two tunnels 72, one for a forward section of the rope loop 90 and one for a return section. Preferably, the two tunnels 72 have respective longitudinal axes X1, X2 that are parallel and spaced apart (and horizontal in use).

Advantageously, as illustrated in Figure 4, the lateral cavity 52 extends along a prevailing development direction X. Preferably, the prevailing development direction X is substantially orthogonal to the aforementioned longitudinal axes X1, X2.

To allow the rope loop 90 to be easily released from a damaged skid 40, the tunnels 72 of the guiding member 70 are formed by tunnel portions.

In one embodiment, the tunnel portions forming the rope tunnel are separable to the extent that they lose contact with each other.

In one embodiment, the tunnel portions are spaced apart, at least enough to create a longitudinal slot in the tunnel for the rope loop 90 to pass through. For this purpose, in one embodiment, the guiding member 70 comprises a first plate 76 and a second plate 78. Each plate 76, 78 comprises a respective concave portion 60, 62 at each of the tunnels 72. Advantageously, the first plate 76 defines the first tunnel portion, and the second plate 78 defines the second tunnel portion.

The plates 76, 78 are preferably attached to each other, and each concave portion 60 faces its concavity towards, and is aligned with, the concavity of the opposite concave portion 62, so that the two juxtaposed and closest concave portions 60, 62 together form a tunnel 72.

To create a tunnel 72, the shape of the curvature of the concave portions 60, 62 is not essential, as it may be, for example, substantially semicircular, polygonal or semi-elliptical.

It is therefore clear that it is sufficient to separate the plates 76, 78 to release the rope loop 90 from the skid 40, which is a quick and easy operation.

The plates 76, 78 can be
- attached to each other by any means of fastening suitable for the purpose, such as screws or clamps, or
- coupled to each other by interlocking, for example, bayonet or male-female or dovetail.

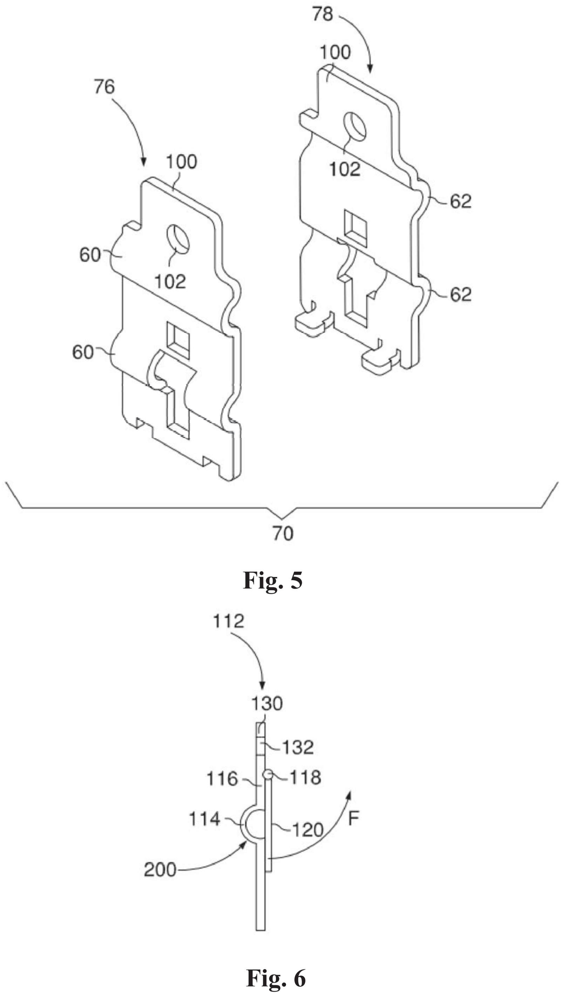

In one embodiment, the tunnel portions forming the rope tunnel are not separable to the point of losing contact with each other but remain permanently connected to each other. An example is shown in Fig. 6, which shows a single guiding member 112 viewed from the front (i.e., on the axis of the rope 90) and equipped with a tunnel 200.

The guiding member 112 comprises a first plate 116 and a second plate 120. The first plate 116 comprises a concave portion 114 that faces the second plate 120 with its concavity. The second plate 120 is hinged to the first plate 116 at a hinge 118, thanks to which the second plate 120 can oscillate around an axis parallel to that of the tunnel to cover (as in fig. 6) or uncover the concavity of portion 114 by moving closer to or further away from it, see arrow F.

When the second plate 120 is closer to the first plate 116, the concavity of portion 114 is covered and the rope tunnel 200 is formed.

Conversely, when the second plate 120 is further away from the first plate 116, the concavity of portion 114 is uncovered and the rope tunnel 200 is open at the side so that rope 90 can exit or enter it.

In one embodiment, the position of the concave portion 114 can be exchanged in the plates 116, 120, or both plates 116, 120 can be provided with a concavity such as concavity 114.

In one embodiment, the displacement of plate 120 may occur by translation relative to plate 116.

The guiding member 112 may have more than one tunnel 200.

To solve the problem of quick replacement of the guiding member, the guiding member 70, 112 is fixed to the block 50 (and in particular to the first side of the latter) and/or to the rib 30 by means of a non-permanent fastening element 104. In this way, it is not necessary to remove the entire skid 40 from the respective rib 30 in order to replace the guiding member 70, 112.

The term "non-permanent" referring to the fastening element 104 means a fastening element mounted in a removable manner to the skid 40, so as to allow the removal of the guiding member 70 and/or the block 50 without the fastening element 104 remaining permanently fixed to any other component of the skid 40.

In one embodiment, the fastening element 104 is removable. Preferably, the fastening element 104 is threaded (i.e., includes a thread). For example, the fastening element 104 is a screw or a threaded pin.

In one embodiment, the fastening element 104 has an anchor point on one side of the block 50, the side opposite to that which forms the side cavity 52.

Alternatively, in accordance with a preferred embodiment of the present invention, the anchor point is located at the foot end of the rib 32. In particular, the anchor point comprises a thread, the purpose of which is described below.

Advantageously, the fastening element 104 comprises a first section, which comprises a first end designed to be engaged, for example, by a screwdriver, a wrench or other tool for screwing the fastening element 104 into the anchor point, and a second section, which comprises a second end opposite the first end and comprising a thread, which is preferably complementary to the thread of the anchor point.

Advantageously, in accordance with a first embodiment of the present invention, not shown in the attached figures, the foot of the rib 32 is provided with the aforementioned engagement hole in a single piece. In particular, in accordance with this first embodiment, the thread of the engagement hole of the foot of the rib 32 is designed to engage with the thread of the fastening element 104. In accordance with this first embodiment, the anchoring point comprises the engagement hole in the foot of the rib 32 (and in particular the thread of the anchoring point corresponds to the thread of the engagement hole).

Alternatively, in accordance with a second embodiment of the present invention illustrated in Figure 4, the foot of the rib 32 comprises an anchoring element 55, which in turn has a threaded hole, which is designed to engage with the thread of the fastening element 104. In particular, the anchoring element 55 is counter-shaped with respect to the engagement hole of the foot of the rib 32 and is designed to be inserted into the engagement hole so as to engage with the latter. Preferably, the end of the foot of the rib 32 has a polygonal cross-section and, even more preferably, the engagement hole of the foot 30 of the rib 32 has a polygonal cross-section. In particular, the anchoring element 55 is counter-shaped to the engagement hole of the rib 32. This prevents the anchoring element 55 from rotating relative to the foot of the rib 32 when the fastening element 104 is screwed into the threaded hole of the anchoring element 55. In accordance with this second embodiment, the anchoring point comprises the engagement hole of the foot of the rib 32 and the anchoring element 55. The attached drawings illustrate the fastening element 104 for the guiding member 70, 112.

In one embodiment, the plates 76, 78 each have a flat end 100 with a through hole 102. In particular, the first plate 76 comprises a first through hole 102, and the second plate 78 comprises a second through hole 102.

The through holes 102 match and the fastening element 104, for example a screw, is inserted into each through hole 102 to fasten the guiding member 70 to the first side of the block 50, which, for this purpose, has a hole 110 (through and smooth or threaded).

More specifically, as shown in Figure 4, the first side of the block 50 is provided with the aforementioned through hole 110 through which the fastening element 104 is inserted to secure the guiding member 70 to the first side of the block 50.

In one embodiment, the plate 116 has a flat end 130 equipped with a through hole 132. The fastening element 104, for example a screw, is inserted into the hole 132 to secure the guiding member 112 on the side of the block 50, which for this purpose has a hole 110 (through and smooth, or threaded).

Advantageously, as illustrated in Figure 4, the fastening element 104 (e.g. a screw or threaded pin) is designed to be inserted, along a fastening direction Y substantially longitudinal to the foot of the rib 32, in order, into the guiding member 70, into the block 50 and to engage with the anchoring point of the foot of the rib 32. More specifically, as illustrated in Figure 4, the fastening element 104 is designed to be inserted, along the aforementioned fastening direction Y substantially longitudinal to the foot of the rib 32, in order, into each through hole 102 of each plate 76, 78, into the through hole 110 of the block 50 and to engage with the anchor point of the foot of the rib 32. Advantageously, the fixing direction Y of the fastening mea element n 104 is substantially parallel to the aforementioned prevailing development direction X of the side cavity 52.

Furthermore, as described above, the anchor point of the foot of the rib 32 comprises a thread, which is complementary to the thread of the fastening element 104, so that screwing the fastening element 104 onto the thread of the anchor point of the foot of the rib 32 tightens the guiding member 70 and block 50 to the foot of the rib 32, securing the guiding member 70 to the block 50 (in particular, securing the guiding member 70 to the first side of the block 50).

In this way, the substantially longitudinal arrangement of the fastening element 104 with respect to the foot of the rib 32 allows the assembly and disassembly operations of the skid 40 to be carried out quickly and easily, for example to replace a component of the skid 40 that is damaged or worn.

Operationally, as described above, in order to secure the guiding member 70 with the block 50 and to tighten the guiding member 70 and the block 50 with the foot of the rib 32, the fastening element 104 is inserted through the guiding member 70 and the block 50 along the fastening direction Y substantially longitudinal to the foot of the rib 32. In particular, as described above, the fastening direction Y of the fastening element 104 is substantially parallel to the aforementioned prevailing development direction X of the side cavity 52. In this way, the fastening element 104 is inserted horizontally with respect to the plane of development of the skid 40, which, in use, is substantially horizontal. In particular, in this way, the fastening element 104 is inserted horizontally with respect to the edges 10 of the sides 12 of the body 14.

Advantageously, as illustrated in Figure 4, the side cavity 52 opens at a section of the second side of the block 50 to allow the foot of the rib 32 to be inserted into the side cavity 52 itself. Furthermore, advantageously, the side cavity 52 is open towards the first side of the block 50 to allow the fastening element 104 to engage with the foot of the rib 32 located inside the side cavity 52.

Preferably, the side cavity 52 communicates with the through hole 110 of the block 50, with the first through hole 102 of the first plate 76 and with the second through hole 102 of the second plate 78. In this way, once the fastening element 104 has been inserted through the first through hole 102 of the first plate 76, through the second through hole 102 of the second plate 78 and through the through hole 110 of the block 50, the aforementioned second section of the fastening element 104 is arranged at least partially inside the side cavity 52. In particular, once the fastening element 104 has been inserted through the first through hole 102 of the first plate 76, through the second through hole 102 of the second plate 78 and through the through hole 110 of the block 50, the aforementioned second end of the fastening element 104 is housed at least partially inside the foot of the rib 32 (in particular, it is housed at least partially in the engagement hole of the foot of the rib 32).

In one embodiment, the guiding member 70, 112 is fixed to the block 50 to protrude from the block 50 so that the guiding member 70, 112 extends towards the sliding member 80 (i.e. downwards).

In one embodiment, which simplifies the manufacture and creation of the side cavity 52, the block 50 comprises a first upper member 56 and a second lower member 58 which are vertically juxtaposed in a sandwich configuration to form the side cavity 52. Advantageously, in this embodiment, both the upper element 56 and the lower element 58 of the block 50 comprise a through opening coaxial and aligned with the through opening of the other element, so as to form the aforementioned through hole 110 of the block 50.

In particular, the two elements 56, 58 are provided with respective insertion holes 560, 580 (parallel to the longitudinal axis X) which are formed on the first side of the block 50. In particular, the two insertion holes 560, 580 communicate with the side cavity 52.

Advantageously, the aforementioned insertion holes 560, 580 are arranged coaxially and aligned with each other once block 50 is assembled, with the first upper element 56 mounted on top of the second lower element 58, and are preferably also coaxial and aligned with the engagement hole of foot 32 of rib 30, so as to allow both the connection of the first upper element 56 to the second lower element 58 (to form the block 50) and also of the foot 32 of the rib 30 to the block 50 thus assembled. In particular, when the aforementioned insertion holes 560, 580 are arranged coaxially and aligned with each other once the block 50 has been assembled, these insertion holes 560, 580 define the aforementioned through hole 110 of the block 50.

Advantageously, as illustrated in Figure 4, each of the first through hole 102 of the first plate 76, the second through hole 102 of the second plate 78 and the through hole 110 of the block 50 extends substantially parallel to the prevailing direction of development X. In particular, each of the first through hole 102 of the first plate 76, the second through hole 102 of the second plate 78 and the through hole 110 of the block 50 extends substantially parallel to the foot of the rib 32.

Preferably, as shown in Figure 4, the second lower element 58 is provided with the aforementioned stop wall.

Advantageously, as illustrated in Figure 4, each of the first through hole of the first plate 76, the second through hole 102 of the second plate 78 and the through hole 110 of the block 50 extends substantially parallel to the fixing direction Y.

## Claims

1. A sliding skid that can be coupled to a foot of a rib (32) supporting a cover tarpaulin, the rib (30) being movable by a traction rope (90) to slide, the skid (40) comprising in use:
- a block (50) having a first side and an opposite second side forming a lateral cavity (52) shaped to accommodate said foot of the rib (32);
- a guiding member (70) connected to said block (50) and comprising a tunnel (72) between whose walls said rope (90) can be threaded without coming out of said tunnel (72);
wherein said tunnel (72) has walls that can be spaced apart to free one side of said tunnel (72) and allow said rope (90) to be inserted into or removed from said tunnel (72);
wherein said guiding member (70) comprises an end, which is fixed to the first side of said block (50) by means of a non-permanent fastening element (104);
wherein said guiding member (70) comprises a first plate (76) and a second plate (78), which have respective flat ends (100) provided with matching through holes (102), and wherein said block (50) is provided with a through hole (110); said fastening element (104) being inserted into each through hole (102) of each of said plate (76, 78) and in the through hole (110) of said block (50) to secure said guiding member (70) on the first side of said block (50), and said fastening element (104) having a threaded anchor point on one end of said foot of the rib (32).

2. Skid according to claim 1, wherein the guiding member (70) comprises a first tunnel portion and a second tunnel portion to form the walls of the tunnel (72), wherein at least said first tunnel portion is movable relative to said second tunnel portion to disconnect the walls of the tunnel (72) and thus be able to release said traction rope (90).

3. Skid according to claim 2, wherein said first tunnel portion is permanently movably connected to said second tunnel portion.

4. Skid according to claim 2, wherein one tunnel portion is separable and/or detachable from the other to permanently cancel the contact between the two tunnel portions.

5. Skid according to any of the preceding claims 2 to 4, wherein
said first tunnel portion comprises a concave portion (60) and
the first tunnel portion and the second tunnel portion are juxtaposed with each other so that said concave portion (60) faces its concavity towards said second tunnel portion to be closed by an opposite surface thereof, thus forming a rope tunnel between said concave portion (60) and said opposite surface.

6. A skid according to any of the preceding claims 2 to 4, wherein
said first tunnel portion comprises a first concave portion (60) having concavity facing said second tunnel portion;
said second tunnel portion comprises a second concave portion (62) having concavity facing said first concave portion (60); and
said first tunnel portion and said second tunnel portion are juxtaposed with each other such that
the tunnel portions are adjacent to each other such that the respective concave portions (60, 62) match to thus form a rope tunnel between the concave portions (60, 62).

7. A skid according to any of the preceding claims, wherein said guiding member (70) comprises an end that is secured to the first side of said block (50) to extend downwardly in a cantilevered manner.

8. A skid according to any of the preceding claims, wherein said fastening element (104) is arranged to be inserted, along a fastening direction (Y), in sequence, into said guiding member (70), into said block (50) and to engage with the anchor point of said foot of the rib (32), wherein the side cavity (52) extends along a prevailing development direction (X), wherein said fastening direction (Y) is substantially parallel to said prevailing development direction (X).

9. A skid according to claim 8, wherein each through hole of said first plate (76) and said second plate (78) and the through hole (110) of said block (50) extends substantially parallel to said prevailing development direction (X).
